# FASCICULE DE BREVET EUROPEEN

(11) **EP 1 958 998 B1**
(45) Date de publication et mention de la délivrance du brevet: **18.11.2009**
(21) Numéro de dépôt: 07003131.5
(22) Date de dépôt: 14.02.2007
(51) Int. Cl.: C09K 3/18

(54) **Granulat pour le traitement de surfaces enneigées et/ou verglacées**
Granulat zur Behandlung von schneebedeckten und/oder vereisten Flächen
Granulate for the treatment of snowy and/or icy surfaces

(43) Date de publication de la demande: 20.08.2008
(73) Titulaire: Ville de la Chaux-de-Fonds, 2300 La Chaux-de-Fonds (CH)
(72) Inventeur: Turtschy, Jean-Claude, 2300 La-Chaux-de-Fonds (CH); Mucaria, Joseph, 2300 La-Chaud-de-Fonds (CH)
(74) Mandataire: Stolmár, Matthias

(56) Documents cités:
- WO-A-02/076192
- FR-A- 2 546 039
- US-A- 4 430 240
- DATABASE WPI Week 197646 Derwent Publications Ltd., London, GB; AN 1976-85745X XP002440733 & JP 51 109290 A (FUJINAMI N) 28 septembre 1976 (1976-09-28)
- DATABASE WPI Week 199636 Derwent Publications Ltd., London, GB; AN 1996-361350 XP002440734 & SE 9 404 184 A (OEBRINK K) 3 juin 1996 (1996-06-03)

## Description

La présente invention a pour objet un nouveau granulat en bois pour le traitement de surfaces enneigées et/ou verglacées dans le cadre de l'entretien hivernal ainsi qu'un procédé pour la préparation d'un tel granulat.

L'entretien du réseau routier en périodes hivernales exige une attention toute particulière. L'ensemble de méthodes et moyens d'opération connus vise à maintenir ou à rétablir la circulation sécuritaire des personnes et des marchandises sur l'ensemble du réseau routier durant l'hiver et est désigné plus généralement par l'expression « viabilité hivernale ».

Les exigences de déneigement et de déglaçage définissent la qualité d'entretien du réseau. Les matériaux utilisés pour l'entretien hivernal des routes dans l'art antérieur sont principalement les agents fondants (le chlorure de sodium et autres sels) et les abrasifs (gravillons, sable). Les fondants ont pour objectif de faire disparaître la neige ou la glace en la transformant en eau. L'action fondante étant influencée par la température, la température de la chaussée détermine le type d'agent fondant à utiliser. A des températures inférieures à -15°C, la plupart des agents fondants se révèlent inefficaces et on utilise à ces basses temperatures l'abrasif sur tous les types de routes.

Il faut noter que l'action fondante est favorisée par le passage des véhicules. La chaleur et l'humidité engendrées par la friction des pneus sur la chaussée amorcent la fonte du sel et stimulent son action sur la glace. En somme, plus le débit de circulation est importante, plus l'action du sel permet l'atteinte des exigences de déglaçage rapide.

Comme décrit ci-dessus, on utilise dans l'art antérieur deux matériaux principaux pour l'entretien hivernal des routes, notamment le chlorure de sodium (sel) et les abrasifs. L'abrasif est un sable tamisé ou un granulat concassé mélangé avec 5% de chlorure de sodium qui empêche le sable de geler en bloc et d'être peu maniable. L'abrasif est utilisé pour améliorer l'adhérence des pneus et ce, surtout dans les virages et aux endroits dangereux (intersections, traverse de voies ferrées).

L'action fondante est également influencée par la température. Cependant, une faible quantité de sel ou de chlorure de calcium est ajoutée à l'abrasif afin de lui permettre de se fixer sur le fond de neige durci et/ou sur la glace. Cependant, en dehors de périodes de froid extrêmes, même cette stratégie offre peu de résultats. De l'eau et de la chaleur sont nécessaires pour la dissolution du sel et pour lui conférer sa pleine capacité.

D'autres produits, tel que le chlorure de calcium en flocon ou sous forme liquide ainsi que le calso, sont aussi utilisés pour augmenter l'efficacité des deux matériaux principaux.

Le calso est un mélange de 43% de chlorure de calcium, de 41% de chlorure de sodium et de 15% de chlorure de magnésium. Le calso est ajouté à 4% dans le sable ou granulat concassé pour fabriquer les abrasifs ou lieu de 5% de sel. Ce produit comprend l'abrasif humide.

Une nouveauté importante est l'utilisation du sel humidifié. Cette technique consiste en humidifiant le sel par le moyen d'une saumure, soit une solution de chlorure de calcium à 28%.

Le sel humidifié est utilisé surtout sur les routes où le débit de circulation est le plus élevé.

Cependant, les matériaux utilisés ont des inconvénients.

Les sels de déverglaçage, en particulier le chlorure de sodium sont nuisible aux plantes qui se trouvent le long des chaussées et des routes piétonnes.

Le désavantage de l'abrasif est - mis à part le contenu de chlorure de sodium - qu'après la fonte de la neige il reste sur place et les routes doivent être nettoyées afin d'éviter une pollution par une poussière fine.

C'est donc l'objet de la présente invention de fournir un nouveau granulat pour le traitement de surfaces enneigées et/ou verglacées, qui évite les inconvénients des matériaux utilisés jusqu'ici et surtout de fournir un produit écologique qui peut être recyclé et utilisé à d'autres fins.

Ce problème est résolu par un granulat pour le traitement de surfaces enneigées et/ou verglacées consistant en particules de bois comprenant 1 à 5 % (masse) au moins d'un sel soluble dans l'eau d'un métal alcalin ou alcalino-terreux ou les sels solubles dans l'eau sont de préférence des chlorures, nitrures et sulfates et acétates des métaux alcalins ou alcalino-terreux. Les métaux les plus préférés sont le sodium, le potassium, le magnésium et le calcium.

La présence du sel en métal alcalin ou alcalino-terreux a pour effet que le granulat, en contact avec une surface enneigée ou verglacée, fait fondre cette dernière. Le granulat s'enfonce alors en partie dans le support.

Ce granulat offre l'avantage que c'est un produit écologique et il reste grâce à sa masse volumique, qui est par rapport au granulat utilisé dans l'art antérieur moins grande, toujours en surface ce qui entraîne une amélioration de l'adhérence de la surface traitée et surtout une adhérence prolongée.

Le granulat selon l'invention est plus tendre que les granulats minéraux normalement utilisé ce qui évite le dégât dans les appartements lorsque les particules adhèrent aux chaussures. Il est également moins agressif pour les pattes des animaux qui marchent sur le granulat.

En plus, le granulat offre l'avantage d'une élimination naturelle, par le réseau d'égouts et traitement dans une station d'épuration ou par brossage et/ou incinération.

Le bois peut être tout bois dur qui est présent en copeaux ou granulés, par exemple le chêne, l'hêtre etc.

Les particules sont obtenues par broyage ou déchiquetage, puis double tamisage pour obtenir la dimension voulue.

Le diamètre des particules s'inscrit de préférence dans une plage allant de 3 à 15 mm.

Il est évident qu'on peut aussi utiliser dans d'autres modes opératoires un mélange de plusieurs sels et/ou faire une composition des sels du même métal.

Parmi les sels préférés pour l'utilisation dans le procédé selon l'invention se trouvent le chlorure de magnésium, de calcium et de sodium ou des mélanges de ces sels.

De préférence, on utilise le chlorure de magnésium qui a une valeur pH très basse, donc c'est peux agressif vis-à-vis des constructions en béton, vis-à-vis de l'environnement et vis-à-vis des animaux par rapport par exemple au chlorure de sodium.

La concentration du sel dans la saumure est de préférence de 10 à 20%. Une concentration plus élevée est possible mais évitée, car elle engendre des coûts supérieurs par rapport à la concentration préférée.

On a trouvé que même une concentration de 10% - 20% est suffisante pour obtenir un granulat montrant les effets avantageux décrit ci-dessus.

Le but de la présente invention est également résolu par un procédé de préparation d'un granulat selon l'invention.

Ce procédé comprend les étapes suivantes :
a) mise à disposition un granulat consistant en particules de bois ;
b) préparation d'une saumure contenant au moins un sel soluble d'un métal alcalin ou alcalino-terreux ou les sels solubles dans l'eau sont de préférence des chlorures, nitrures et sulfates et acétates des métaux alcalins ou alcalino-terreux.
c) macération du granulat dans la saumure ;
d) Séchage du granulat ainsi obtenu ;
e) Torréfaction du granulat séché.

L'étape de macération (trempage) dure entre 1 et 5 jours, de préférence à température ambiante.

Dans d'autres modes opératoires, on peut aussi prévoir de chauffer légèrement pour obtenir une meilleure adsorption du sel dans le bois.

L'étape de séchage se fait entre 1 heure à 5 heures, de préférence entre 3 et 5 heures, à l'air libre ou par apport calorique à une température comprise dans une plage de 100°C à 200°C, de préférence de 130°C à 140°C. Il faut noter que la durée de séchage dépend aussi de la nature de bois parce que certaines sortes de bois, comme par exemple le chêne, peuvent subsister à des températures supérieures que par exemple l'hêtre etc.

La torréfaction du produit séché se fait avec du matériel approprié (four, plaque chauffante, torréfacteur) entre 180°C et 250% jusqu'à l'obtention d'une surface légèrement brunie et dure.

Le produit obtenu selon le procédé selon l'invention, c'est-à-dire le produit selon l'invention, est destiné à améliorer l'adhérence des surfaces enneigées et/ou verglacées dans le cadre de l'entretien hivernal des routes et des trottoirs. On peut l'appliquer à toute surface circulée, par exemple des routes, des trottoirs, des zones piétonnes.

En général, le produit est dosé à 20 à 100 g/m² et est étenduà la main ou à la machine.

Comme déjà décrit ci-dessus, après la fonte de neige le produit selon la présente invention peut être éliminé naturellement par le réseau d'égouts ou par brossage et incinération.

## Revendications

1. Granulat pour le traitement de surfaces enneigées et/ou verglacées consistant en particules de bois comprenant 1 à 5 à 10 % (masse) d'au moins un sel soluble dans l'eau d'un métal alcalin ou alcalino-terreux, **caractérisé en ce que** le sel soluble est un chlorure, nitrure, sulfate ou acétate d'un métal alcalin ou alcalino-terreux

2. Granulat selon la revendication 1, **caractérisé en ce que** le diamètre du granulat est comprise entre 3 et 15 mm.

3. Granulat selon la revendication 2, **caractérisé en ce que** les métaux sont sélectionnés du groupe consistant en Na, K, Mg, Ca et leurs mélanges.

4. Granulat selon la revendication 2 ou 3, **caractérisé en ce que** plusieurs sels sont présents.

5. Procédé de préparation d'un granulat pour le traitement de surfaces enneigées et/ou verglacées selon l'une des revendications précédentes comprenant les étapes suivantes :
a) Mise à disposition un granulat consistant en particules de bois ;
b) Préparation d'une saumure contenant au moins un sel soluble dans l'eau d'un métal alcalin ou alcalino-terreux dont le sel soluble est un chlorure, nitrure, sulfate ou acétate d'un métal alcalin ou alcalino-terreux ;
c) Trempage du granulat dans la saumure ;
d) Séchage du granulat ;
e) Torréfaction du granulat séché.

6. Procédé selon la revendication 5, **caractérisé en ce que** le sel est sélectionné du groupe consistant en MgCl₂, CaCl₂, NaCl et leurs mélanges.

7. Procédé selon la revendication 6, **caractérisé en ce que** la concentration du sel dans la saumure est comprise dans une plage de 10 à 20%.

8. Procédé selon la revendication 7, **caractérisé en ce que** l'étape de trempage dure entre 1 et 5 jours.

9. Procédé selon la revendication 8, **caractérisé en ce que** le trempage est fait à température ambiante.

10. Procédé selon la revendication 9, **caractérisé en ce que** le séchage se fait à l'air libre ou par apport calorique.

11. Procédé selon la revendication 10, **caractérisé en ce que** l'étape de torréfaction se fait entre 180°C et 250°.

## Claims

1. Granules for the treatment of snow-covered and/or frozen surfaces consisting of particles made of wood comprising 1 to 5 to 10 % (mass) of at least one water-soluble salt of an alkali or earth alkali metal, **characterized in that** the soluble salt is a chloride, a nitrate, a sulfate or acetate of an alkali or earth alkali metal.

2. Granules according to claim 1, **characterized in that** the diameter of the granules is comprised within 3 and 15 mm.

3. Granules according to claim 2, **characterized in that** the metals are selected from the group consisting of Na, K, Mg, Ca and mixtures thereof.

4. Granules according claims 2 or 3, **characterized in that** a plurality of salts are present.

5. Process for the preparation of granules for the treatment of snow-covered and/or frozen surfaces according to one of the preceding claims comprising the following steps:
a) providing granules consisting of particles made of wood;
b) preparation of a concentrated solution containing at least one water-soluble salt of a alkali or earth alkali metal, wherein the soluble salt is a chloride, a nitrate, a sulfate or acetate of an alkali or earth alkali metal;
c) immersing the granules in the concentrated solution;
d) drying the granules;
e) roasting the dried granules.

6. Process according to claim 5, **characterized in that** the salt is selected from the group consisting of MgCl₂, CaCl₂, NaCl and mixtures thereof.

7. Process according to claim 6, **characterized in that** the concentration of the salt in the concentrated solution is comprised within a range of 10 to 20 %.

8. Process according to claim 7, **characterized in that** the step of immersion takes between 1 and 5 days.

9. Process according to claim 8, **characterized in that** the immersion is carried out at ambient temperature.

10. Process according to claim 9, **characterized in that** the drying is done at air or by supply of heat.

11. Process according to claim 10, **characterized in that** the roasting step is carried out between 180 °C and 250 °C.

## Patentansprüche

1. Granulat für die Behandlung von verschneiten und/oder vereisten Oberflächen, bestehend aus Holzteilchen, umfassend wenigstens 1 bis 5 bis 10 Massen-% eines in Wasser löslichen Salzes eines Alkali- oder Erdalkalimetalls, **dadurch charakterisiert, dass** das lösliche Salz ein Chlorid, Nitrat, Sulfat oder Acetat eines Alkali- oder Erdalkalimetalls ist.

2. Granulat nach Anspruch 1, **dadurch charakterisiert, dass** der Durchmesser des Granulats im Bereich zwischen 3-15 mm enthalten ist.

3. Granulat nach Anspruch 2, **dadurch charakterisiert, dass** die Metalle aus der Gruppe, bestehend aus Na, K, Mg, Ca und ihren Mischungen, ausgewählt sind.

4. Granulat nach Anspruch 2 oder 3, **dadurch charakterisiert, dass** mehrere Salze vorhanden sind.

5. Verfahren zur Herstellung eines Granulats für die Behandlung von verschneiten und/oder vereisten Oberflächen nach einem der vorhergehenden Ansprüche, umfassend die folgenden Schritte:
a) Bereitstellung eines Granulats, bestehend aus Holzteilchen;
b) Herstellung einer Salzlösung, umfassend wenigstens ein in Wasser lösliches Salz eines Alkali- oder Erdalkalimetalls, dessen lösliches Salz ein Chlorid, Nitrat, Sulfat oder Acetat eines Alkali- oder Erdalkalimetalls ist;
c) Tränken des Granulats in der Salzlösung;
d) Trocknen des Granulats;
e) Rösten des getrockneten Granulats.

6. Verfahren nach Anspruch 5, **dadurch charakterisiert, dass** das Salz aus der Gruppe, bestehend aus MgCl₂, CaCl₂, NaCl und ihren Mischungen, ausgewählt ist.

7. Verfahren nach Anspruch 6, **dadurch charakterisiert, dass** die Konzentration des Salzes in der Salzlösung in einem Bereich von 10 bis 20 % enthalten ist.

8. Verfahren nach Anspruch 7, **dadurch charakterisiert, dass** der Schritt des Tränkens zwischen 1 und 5 Tagen dauert.

9. Verfahren nach Anspruch 8, **dadurch charakterisiert, dass** das Tränken bei Umgebungstemperatur durchgeführt wird.

10. Verfahren nach Anspruch 9, **dadurch charakterisiert, dass** das Trocknen an der Luft oder durch Wärmezufuhr durchgeführt wird.

11. Verfahren nach Anspruch 10, **dadurch charakterisiert, dass** der Schritt des Röstens zwischen 180 °C und 250 °C durchgeführt wird.
